# EUROPEAN PATENT SPECIFICATION

(11) **EP 2 215 196 B1**
(45) Date of publication and mention of the grant of the patent: **28.12.2016**
(21) Application number: 08851366.8
(22) Date of filing: 18.11.2008
(51) Int. Cl.: A23L 33/115, C11C 1/02, A23G 9/32, A23D 9/00

(54) **Frozen confection with glyceride mixture**
Gefrorene Süssware mit Glyzeridmischung
Confiserie congelée avec mélange de glycérides

(30) Priority: 19.11.2007 SE 0702564
(43) Date of publication of application: 11.08.2010
(73) Proprietor: AAK Sweden AB, 374 82 Karlshamn (SE)
(72) Inventor: NILSSON, Daniel, S-374 51 Asarum (SE); PERSSON, Marcus, S-374 34 Karlshamn (SE)
(74) Representative: Bergenstråhle Group AB
(86) International application number: PCT/SE2008/000646
(87) International publication number: WO 2009/067069

(56) References cited:
- EP-A1- 0 536 824
- EP-B1- 0 078 568
- US-A- 3 492 130
- US-A1- 2005 037 111
- US-B1- 6 388 113
- MAMAT H ET AL: "Physicochemical characteristics of palm oil and sunflower oil blends fractionated at different temperatures", FOOD CHEMISTRY, ELSEVIER LTD, NL, vol. 91, no. 4, 1 August 2005 (2005-08-01) , pages 731-736, XP025282977, ISSN: 0308-8146, DOI: DOI:10.1016/J.FOODCHEM.2004.06.045 [retrieved on 2005-08-01]

## Description

The present invention relates to a frozen aerated confection comprising a glyceride mixture, and the use of said glyceride mixture for the manufacture of frozen aerated confection.

### BACKGROUND OF THE INVENTION

The main components of ice cream are water, sugar, fat and milk solids. The fat is usually butter oil (cream). Of the vegetable fats coconut oil is very common. These two oils are very good for ice cream manufacture for several reasons. They are sufficiently solid at low temperatures to ensure a good aeration (between 0°C and 5°C) during freezing. Furthermore they provide a very pleasant mouthfeel, creaminess, and good melt off. These fats also give a good structure to the ice cream and are stable towards fluctuations in temperature during storage, in particular in respect of flavour and iciness. They are also dry on extrusion. The reason for all these positive features is the high amounts of saturated fatty acids that contribute with solid fat. It is the solid fat that contributes with stability against dropping, storage stability and the meltoff experienced during consumption. Milk fat contains cholesterol and high amounts of saturated fatty acids (60-75%) and some trans fatty acids (~3%) while coconut oil contains around 92 % saturated fatty acids. Cholesterol, trans fatty acids and saturated fatty acids (trans and saturated fatty acids increase the low density lipoproteins) are believed to increase the risk of coronary heart diseases and stroke and hence it is beneficial to decrease their concentration as much as possible. During consumption of ice cream the fat plays a major role during the melting in the mouth and for the release of flavours. A liquid oil causes too fast melting in the mouth, giving the ice cream a poor mouth feel. A fat that is too hard due to too much solid fat melts at a temperature above the temperature of the mouth, giving a fatty and waxy feeling that is unpleasant. Ice cream made from full cream and coconut oil has a very pleasant melting profile, giving a full, creamy pleasant melting. Hence fat systems mimicking the melting behaviour of full milk and coconut oil are often considered to be desirable. With a lower amount of saturated fatty acids, the fat becomes more liquid, which in turn puts higher demands on the fat system in terms of giving a pleasant mouthfeel.

It would be desirable to be able to provide a glyceride mixture that can be used in the production of frozen aerated confections, which mixture has a low content of saturated fatty acids while providing the produced frozen aerated confections a similar eating sensation as achieved with full cream or coconut oil.

One object of is to provide such a glyceride mixture.

### SUMMARY OF THE INVENTION

Thus, there is provided a mixture consisting of glycerides wherein 18 to 35%, by weight of the total amount of fatty acids in said glycerides, are saturated fatty acids; at least 90%, by weight of said saturated fatty acids, are fatty acids of saturated C16 and/or C18 fatty acids; and the ratio of the combined percentages of SOS and SSO, by weight of the total amount of glycerides, to the percentage of SSS, by weight of the total amount of glycerides, is greater than 15. The invention is defined by the claims.

### DEFINITIONS

In the present specification, the term "frozen confections" includes all frozen confections whose basic raw materials are oil-and-fat ingredients and water. In frozen confections, water is frozen to form ice crystals which are responsible for the skeleton and shape retention of frozen confections and therefore the compositions thereof are different from that of whipped cream.

The term "frozen aerated confection" as used in this specification means a frozen confection made by freezing a pasteurised mix of ingredients with agitation to incorporate air, for example ice cream. Frozen aerated confections contain water, a fat component, one or more sweeteners, proteins (normally milk proteins), and optionally other ingredients such as emulsifiers, stabilisers, colours and flavours.

The term "glyceride" and as used herein includes mono-, di-, and triglyceride.

The term "fatty acids" as used herein includes fatty acid residues in a glyceride molecule.

The term "saturated fatty acid", abbreviated SAFA, as used herein means a fatty acid that has no carbon-carbon double bond.

As used herein, "S" refers to saturated fatty acid residues of the glyceride molecule, such as stearic (St) or palmitic (P) saturated fatty acid residues of the glyceride molecule; and "O" refers to oleic (O) fatty acid residues of the glyceride molecule. Accordingly, "SOS", "SSO", and "SSS" signify saturated-oleic-saturated, saturated-saturated-oleic, and saturated-saturated-saturated triglycerides, respectively.

The term "solid fat content", abbreviated SFC, as used herein means the solid fat content as determined according to IUPAC 2.150, measured at 10°C.

### DETAILED DESCRIPTION OF THE INVENTION

According to one embodiment of the present invention, the ratio of the percentage of SOS, by weight of the total amount of glycerides, to the percentage of SSS, by weight of the total amount of glycerides, in the mixture, is greater than 15. According to another embodiment 20 to 30%, by weight of the total amount of fatty acids in said glycerides, are saturated fatty acids.

According to yet another embodiment at least 90%, by weight of said unsaturated C18 fatty acids, consists of oleic and linoleic acid.

According to one embodiment said unsaturated C18 fatty acids comprise up to 72%, by weight of the total amount of fatty acids in said glycerides, of oleic acid; up to 16%, by weight of the total amount of fatty acids in said glycerides, of linoleic acid; and up to 8%, by weight of the total amount of fatty acids in said glycerides, of linolenic acid. In one aspect of this embodiment said unsaturated C18 fatty acids comprise 47 to 72%, by weight of the total amount of fatty acids in said glycerides, of oleic acid; 6 to 16%, by weight of the total amount of fatty acids in said glycerides, of linoleic acid; and 0 to 8%, by weight of the total amount of fatty acids in said glycerides, of linolenic acid.

According to another embodiment said unsaturated C18 fatty acids comprise at least 46%, by weight of the total amount of fatty acids in said glycerides, of oleic acid.

According to another embodiment at least 65% of the glyceride crystals in the mixture are in the beta form, as measured by X-ray diffraction at 5°C after 16 hours of storage.

According to another embodiment at least 60% of the glyceride crystals are in the beta form, as measured as measured by X-ray diffraction at 5°C after 16 hours of storage; or the penetrometer hardness of the glycerides, as determined by means of a penetrometer cylinder with a diameter of 4 mm penetrating 10 mm at a velocity of 0.5 mm/s after 16 hours of storage of the mixture at 5°C, is at least 0.55 kg.

The present invention, provides a frozen aerated confection comprising the disclosed mixture.

According to one aspect of this embodiment the mixture is a mixture of a palm mid fraction and any of rapeseed oil, high oleic rapeseed oil, or high oleic sunflower oil.

According to another aspect of this embodiment the frozen confection is a frozen aerated confection. According to a further aspect of this embodiment the frozen aerated confection is ice cream.

According to another embodiment there is provided a feedstock for food production, which feedstock comprises the mixture and one or more additional fat or oil component, wherein the ratio of the combined percentages of SOS and SSO, by weight of the total amount of glycerides, to the percentage of SSS, by weight of the total amount of glycerides, is greater than 6. According to one aspect of this embodiment the ratio of the percentage of SOS, by weight of the total amount of glycerides, to the percentage of SSS, by weight of the total amount of glycerides, is greater than 6. According to another aspect of this embodiment the ratio of the combined percentages of SOS and SSO in the feedstock, by weight of the total amount of glycerides, to the percentage of SAFA, by weight of the total amount of glycerides, is equal to or greater than 1.

According to yet another aspect of this embodiment SFC (measured at 10°C)/SAFA + 0.025(30 - SAFA) ≥ 0.85.

According to another embodiment there is provided a frozen confection comprising the feedstock. According to one aspect of this embodiment the comprised feedstock is a feedstock comprising a palm mid fraction, palm-stearin hard and any of rapeseed oil, high oleic rapeseed oil, or high oleic sunflower oil. According to another aspect of this embodiment the frozen confection is a frozen aerated confection. According to a yet further aspect of this embodiment the frozen aerated confection is ice cream.

Many different fats and oils can be used in frozen confections of the present invention, such as, for instance: shea; mango; sal; illipe; cocum; palm; high oleic rapeseed; rapeseed (such as, for instance, LOBRA produced by Aarhus Karlshamn AB); sunflower; high oleic sunflower; soya bean; peanut; maize; cottonseed; and olive.

### Ice Cream Manufacturing

Ice cream manufacturing is usually divided in two operations, mix manufacturing and freezing operations. Mix manufacturing consists of:
mixing the ingredients; pasteurization; homogenization; cooling to a low temperature, for example 0 to 5°C; and ageing, during which the interfacial composition of the surface of the oil drops are changed, emulsifiers are adsorbed, some proteins are hydrated, other less surface active are desorbed, and furthermore some of the fat crystallizes. The changes in the interfacial layers are important for fat agglomeration to occur, otherwise the oil drops will be too hard to be properly destroyed during freezing, which in turn would lead to insufficient fat agglomeration. Fat crystallization is important - otherwise the drops will agglomerate to easy, leading to large lumps, i.e. churning instead of fat agglomeration.

The freezing operations consists of freezing, during which the mix is cooled under high shear conditions while air is incorporated and ice crystals forms and fat agglomerates (the overrun is typically around 100%); extrusion, during which the dryness is an important parameter especially for soft served ice cream; and hardening.

### TESTS

### Meltdown stability

The melt down stability of a frozen aerated product is important for several reasons. If the ice cream is served soft, it is important that the shape is retained for a while to prevent dripping and collapse of the ice cream. Also during serving it is important for the ice cream to keep the shape. The melt down stability is dependent on the agglomerated fat that keeps the air bubbles from fusion and to prevent the water based solution from drainage. Both these effects are detrimental for the impression of the ice cream, i.e. both serum separation and air bubble collapse. Hence, it is important that proper emulsifiers are present and that the freezing is done in such a way that the agglomerated fat stabilizes the ice cream. Furthermore it is important that the agglomerated fat has a high melting point otherwise collapse occurs as the temperature increases. Hence, as the amount of saturated fatty acids decreases it becomes more and more difficult for the ice cream to keep its structure when placed at room temperature. This is measured at isothermal conditions (room temperature 295 K) by placing the ice cream on a grid (wire gauze with 10 wires/inch) and the amount that is separated is easily measured (either by weight or volume). Half a packet, 125 ml, of the frozen aerated confection is placed on the grid at room temperature and the volume dripping through the grid is collected in a vessel and the volume vs. time is recorded. The time it takes for 5 ml to separate is called "Drop time 5 ml" in the tables in the examples section.

### Sensory evaluation

The sensorics are measured by a trained panel using the Quantitative Descriptive Analysis (QDA) profiling method.

This profiling method, developed by Stone et al. (1974), has found wide acceptance as the standard profiling method by many sensory analysts world wide. A trained panel is the most usual sensory evaluation for conducting descriptive testing. This is related to the capability of a trained panel to describe the differences between products, samples and primary produces. The QDA test is the most sophisticated technique available and this method answers three questions:
1. Are there any sensory differences between the products?
2. What are they?
3. How great are they?

The number of assessors in this technique is usually six to ten. They are well trained, experienced and also subjected to a calibration evaluation as Principal Component Analysis (PCA) to ensure the reliability of the results. The assessors learn to differ-entiate and rate the intensity aspects of a sample, also to define the extent to which each characteristic is present. Products may have the same qualitative descriptors but differ significantly in intensity, which will create a totally different sensory profile for each. The descriptive and definition work are done in special training sessions, where the assessors are subjected to samples that represent as many characteristic differences within the product group as possible. It is important to ensure that all assessors mean the same thing when they name a characteristic since depending on age, background, education, etc, the words may differ describing the same sensation. Then the assessors agree which characteristics will be used for the special product description. This work will end up with a score sheet for the product group to be tested. The recommendation for this method is to use ungraduated linear scales from zero stimulus to high level of stimulus. During the performance of the tests, the assessors mark the scale to represent the perceived intensity of the characteristic in question. Instruction sheets with more detailed information of each characteristic as elucidatory for the assessors must also be attached. When the training sessions are over the selected assessors will be part of the panel for the product type to be analysed. Every sample will be analysed twice by the same assessors in replicated sessions. The results are statistically analysed and significance of the differences determined.

Both the sensoric stability during cyclic storage, oxidation etc., and the iciness are important properties that are dependent on the fat making up the ice cream and especially so the agglomerated fat.

### Hardness

When the amount of saturated fatty acids is low it is difficult to obtain good drop stability for most composition. This could be due to that the amount of solid fat is quite low after aging and therefore to soft to give the desired fat agglomeration. Hence, for these low saturated fat recipes optimizing the fat composition to give maximum hardness is important to obtain a good quality product. This is done if the glycerides can crystallize together so that all crystals contribute to the solid network giving a lot of hardness although low in saturates. This property of the fat system is determined by measuring the hardness at the aging temperature after overnight storage with a penetrometer for a pure fat system. The penetrometer measures the force necessary to penetrate the fat with a constant velocity. Hence the harder the fat is the higher is the hardness and the better becomes the quality of the ice cream for this low saturates fat system. 30 g of fat was melted and placed in a jar (diameter 49 mm) and stored for 16 hours at 5°C. The hardness was then measured with a cylinder of diameter 4 mm and the velocity was 0.5 mm/s and the penetration depth was 10 mm. The maximum hardness was then recorded.

### X-Ray diffraction measurements

For fat blends for ice cream use with a very low amount of saturated fatty acids it is very beneficial if the solid fat can form beta crystals. This gives a better fat agglomeration and hence better quality. The softer beta' crystals are probably not as hard as the beta crystals and hence more of them are needed instead to obtain a good fat agglomeration. The polymorphic forms of fats and fat mixtures are best determined by using x-ray diffraction measurements since these gives unequivocal information on the polymorphic form of the fat. Fats can form different crystal forms differing in the way the chains are packed. Thus, the melting point and density differs. The three most common crystal forms are, in order of increasing stability, alpha, beta' and beta. Fats that form the most stable form with the highest density, the beta form, need to be very compatible in order to from this most well packed polymorph. If the glycerides making up the fat mixture has lots of different glycerides differing in size and shape they cannot crystallize together in the most well packed form

The way a X-ray diffraction technique works is that repeating distances found in a crystal (distances between molecules etc.) are diffracted and the intensity of the diffracted X-rays are proportional to the amount. Hence the amount of crystals in the different polymorphic forms can be estimated by looking at a unique distance for the different polymorphic forms and hence the relative amounts can be decided. There is a region around 4.6 Å that is unique for the beta polymorph and peaks between 4.2 to 4.4 A that is typical for beta'. The relative intensity for the beta polymorph and for the most intense ones for the beta' polymorph in the region 4.4 to 4.6 Å was used to calculate the relative amounts of the different crystal forms after ageing (before freezing). Hence the crystal form at the ageing temperature, 5°C, is measured for the pure fat systems after 16 hours of storage and given in the examples below.

### EXAMPLES

The following Examples further illustrate the present invention in detail but are not to be construed to limit the scope thereof. In these Examples, ice cream was produced as indicated above and all the "parts" and "percentages" are by weight unless other-wise stated.

The below standard recipe was used in the production of ice creams

### Ice cream recipe and process parameters

**Table 1**

| **Standard Recipe** | **Weight-%** |
|---|---|
| Saccharose (Danisco) | 11.7 |
| Glucose syrup - Reppos LF9 (Reppe AB, Sweden) | 5.0 |
| SKIM MILK POWDER (ArlaFood) | 5.5 |
| Whey powder concentrate - PSD Q100 (ArlaFood) | 4.5 |
| FAT | 9.7 |
| Emulsifier/Stabilizer - Cremodan SE30 (Danisco) | 0.7 |
| Aroma and Colour | 0.1 |
| Water | 62.8 |
| TOTAL | 100 |

### Palm mid fraction - PMF

There are several routes to enrich the middle fraction found in palm oil. The aim is to maximize the amount of POP while having a low amount of trisaturated glycerides. By repeating the fractionation three or four times preferably the final in solvent, the optimal PMF can be obtained. The used PMF has a large ratio of POP/PPP and POP/POO and an iodine value of around 34.

The process for the production of the ice cream is described below:
The water is pumped into a tank and heated to 40°C. The skim milk powder is dispersed into the water and the recombined skim milk is heated to 65-70°C. Sugar, starch and emulsifier/stabiliser are added during agitation. All dry components shall be completely solved. The fat blend is melted and heated to 65-70°C and then added to the water phase while stirring continuously. The mix is heated to 75-80°C in a heat exchanger and then homogenised in a 1-stage homogeniser at 150 bar. The mixture is pasteurised at 80-85°C for 15-25 seconds and then rapidly cooled down to 2-4°C and transferred to an aging tank. During this time colour and aroma are added. The mixture is aged for minimum 4 hours. The mixture is frozen and aerated in a continuous ice cream freezer of Royer type. The rotator is run at 70% of the maximum speed, the product is cooled to -6°C and air is added until the overrun is 100%. The product is packed in 250 ml waxed paper cartons and hardened at -35°C for a minimum 2 hours and then stored at -25°C.

Two different kinds of tests were made:
1. A fresh sample was compared to a predetermined reference.
   A group of contemplated candidates for sensory evaluation panel were subjected to a training session of different ice cream products. The group agreed on six different characteristics which describes the properties of ice cream in an excellent and understandable way. The characteristics were "Icy", "Tough", "Rapid Melting", "Creamy/Creaminess", "Totally Melted" and "Fresh/Neutral Taste". After a period of training sessions the individual performance was evaluated statistically and ten assessors were selected to become an ice cream panel for QDA.
   Before every analysis the samples were cut into similar pieces and tempered for two hours at minus 20°C. The pieces were served in a randomized order and marked with random number codes. All analysis tests were performed twice as replicated sessions.
   The evaluation of the test results was performed with a special sensory statistical program FIZZ developed by BIOSYSTEMES, Couternon, France.
2. A cyclic storage stability test, in which the temperature of the storage refrigerator was set to fluctuate cyclic between -27°C to -6°C with a minimum difference of at least 20°C. This is to simulate the defrosting of a refrigerated cabinet. For example going from -25°C to -5°C can be connected with a decrease in ice content from around 90 to around 50%. Hence it is important that the fat network can lock this great amount of water to prevent large ice crystals from forming on subsequent temperature decrease and solidification of water to ice at -25°C. The samples were cycled 15 times during 3 weeks; the ice creams were held at -6°C for 12 h during each cycle.

### Example 1

**Ice cream made using a mixture according to the invention containing 41.5% PMF and 58.5% LOBRA**
(percentages calculated on the total weight of the used mixture); below, the used mixture is referred to as "Fat A" and the amount of different fatty acids, SOS, SSS, SOS/SSS, Drop time 5 ml, hardness and amount of beta is given in Table 2 below.

**Table 2**

| **Fat A** | |
|---|---|
| C16 | 25.0% |
| C18 | 3.8% |
| C18:1 | 49.4% |
| C18:2 | 13.2% |
| C18:3 | 6.0% |
| SAFA | 30.0% |
| SSO+SOS | 35.2% |
| SOS/SSO | about 15 |
| SSS | 1.9% |
| (SSO+SOS)/SSS | 18.2 |
| Drop time 5 ml | 120 minutes |
| Hardness | 0.45 kg |
| Amount of beta | 80% |
| SFC@10°C | 30.3% |

An ice cream was produced according to the above-referred Standard Recipe. The sensoric characteristics were compared with coconut oil and are given in Table 3 below.

**Table 3**

| **Sensoric characteristic** | **Fat A vs. Coconut oil** |
|---|---|
| Icy | BETTER |
| Tough | No difference |
| Rapid melting | No difference |
| Creamy/Creaminess | No difference |
| Totally melted | No difference |
| Fresh/Neutral taste | No difference |

"BETTER" indicates that the fat is better than the reference with a significant difference of at least at the 5 % level calculated by ANOVA. Similarly "WORSE" means that the measured characteristic in the inventive ice cream is worse as compared to the reference with a significant difference at least at the 5% level. "No difference" means no significant difference.

Fat A and coconut oil had the same sensoric characteristics except for the iciness where coconut oil was experienced as more icy. The melt down stability is also very good fully comparable with coconut oil (130 minutes). Hence for such a low amount of saturated fatty acids Sample Fat A show unusual good sensoric features fully comparable to coconut oil while having a great melt down resistance.
The sensoric stability during cyclic storage is a very important feature of ice cream. The sensoric tests done on stored ice cream showed that sample fat A could handle cyclic storage very well. No significant difference compared to a fat sample stored at constant temperature could be detected.

### Example 2

**Ice cream made using a mixture according to the invention containing 23.5 % PMF and 76.5 % LOBRA**
(percentages calculated on the total weight of the used mixture); below, the used mixture is referred to as "Fat B" and the amount of different fatty acids, SOS, SSS, SOS/SSS, Drop time 5 ml, hardness and amount of beta is given in Table 4 below.

**Table 4**

| **Fat B** | |
|---|---|
| C16 | 16.1% |
| C18 | 2.8% |
| C18:1 | 54.0% |
| C18:2 | 16.3% |
| C18:3 | 7.9% |
| SAFA | 20.0% |
| SSO+SOS | 20.9% |
| SOS/SSO | about 15 |
| SSS | 1.1% |
| (SSO+SOS)/SSS | 18.9 |
| Drop time 5 ml | 90 minutes |
| Hardness | 0.046 kg |
| Amount of beta | 69% |
| SFC@10°C | 13.0% |

An ice cream was produced according to the above-referred Standard Recipe. The sensoric characteristics were compared with coconut oil and are given in Table 5 below.

**Table 5**

| **Sensoric characteristic** | **Fat B vs. Coconut oil** |
|---|---|
| Icy | No difference |
| Tough | No difference |
| Rapid melting | No difference |
| Creamy/Creaminess | WORSE |
| Totally melted | No difference |
| Fresh/Neutral taste | No difference |

"BETTER" indicates that the fat is better than the reference with a significant difference of at least at the 5 % level calculated by ANOVA. Similarly "WORSE" means that the measured characteristic in the inventive ice cream is worse as compared to the reference with a significant difference at least at the 5% level. "No difference" means no significant difference.
Fat B is experienced as slightly less creamy as compared to coconut oil otherwise the two fat systems are equal. Fat B has a very good drop time and no significant difference was observed during cyclic storage. Fat B has a high amount of crystals in the beta form.

### Example 3

**Ice cream made using a feedstock according to the invention containing 35% PMF, 4% Palm-Stearin Hard Iodine Value 15 (PStH IV15) and 61% LOBRA**
(percentages calculated on the total weight of the feedstock); below, the used feedstock is referred to as "Fat C" and the amount of different fatty acids, SOS, SSS, SOS/SSS, Drop time 5 ml, hardness and amount of beta is given in Table 6 below.

**Table 6**

| **Fat C** | |
|---|---|
| C16 | 24.8% |
| C18 | 3.5% |
| C18:1 | 49.1% |
| C18:2 | 13.6% |
| C18:3 | 6.3% |
| SAFA | 29.6% |
| SSO+SOS | 30.8% |
| SOS/SSO | about 14 |
| SSS | 4.2% |
| (SSO+SOS)/SSS | 7.3 |
| Drop time 5 ml | 120 minutes |
| Hardness | 0.55 kg |
| Amount of beta | 33% |
| SFC@10°C | 30.2% |

An ice cream was produced according to the above-referred Standard Recipe. The sensoric characteristics were compared with coconut oil and are given in Table 7 below.

**Table 7**

| **Sensoric characteristic** | **Fat C vs. Coconut oil** |
|---|---|
| Icy | BETTER |
| Tough | No difference |
| Rapid melting | No difference |
| Creamy/Creaminess | No difference |
| Totally melted | No difference |
| Fresh/Neutral taste | No difference |

"BETTER" indicates that the fat is better than the reference with a significant difference of at least at the 5 % level calculated by ANOVA. Similarly "WORSE" means that the measured characteristic in the inventive ice cream is worse as compared to the reference with a significant difference at least at the 5% level. "No difference" means no significant difference.

Fat C and coconut oil had the same sensoric characteristics except for the iciness where coconut oil was experienced as more icy. The melt down stability is also very good fully comparable with coconut oil (130 minutes). Hence for such a low amount of saturated fatty acids sample Fat C show unusual good sensoric features fully comparable with coconut oil.
Fat C could also handle cyclic storage very well. No significant difference compared to a sample stored at constant temperature could be detected. Fat C has little crystals in the beta form, 33%, but forms a hard structure as measured with the penetrometer, 0.55 kg.

### Comparative Example 1

**Ice cream made by using a mixture of 53% Palm oil and 47% LOBRA**
(percentages calculated on the total weight of the used mixture); below, the used mixture is referred to as "Fat X" and the amount of different fatty acids, SOS, SSS, SOS/SSS, Drop time 5 ml, hardness and amount of beta is given in Table 8 below.

**Table 8**

| **Fat X** | |
|---|---|
| C16 | 25.3% |
| C18 | 3.0% |
| C18:1 | 49.2% |
| C18:2 | 14.7% |
| C18:3 | 4.9% |
| SSO+SOS | 21.9% |
| SOS/SSO | about 6 |
| SAFA | 30% |
| SSS | 4.2% |
| (SSO+SOS)/SSS | 5.2 |
| Drop time 5 ml | 35 minutes |
| Hardness | 0.1 kg |
| Amount of beta | 0% |
| SFC@10°C | 16.7% |

An ice cream was produced according to the above-referred Standard Recipe. The sensoric characteristics were compared with coconut oil and are given in Table 9 below.

**Table 9**

| **Sensoric characteristic** | **Fat X vs. Coconut oil** |
|---|---|
| Icy | WORSE |
| Tough | No difference |
| Rapid melting | No difference |
| Creamy/Creaminess | WORSE |
| Totally melted | WORSE |
| Fresh/Neutral taste | No difference |

"BETTER" indicates that the fat is better than the reference with a significant difference of at least at the 5 % level calculated by ANOVA. Similarly "WORSE" means that the measured characteristic in the inventive ice cream is worse as compared to the reference with a significant difference at least at the 5% level. "No difference" means no significant difference.

Fat X is composed of palm oil and LOBRA. Ice-cream based on palm oil shows less creamy/creaminess and is not fully melted in the mouth, it is also experienced as more icy as compared to coconut oil. The drop stability is also poor and it was found icier after the cyclic storage test.

## Claims

1. A frozen aerated confection comprising:
a mixture consisting of glycerides wherein 18 to 35%, by weight of the total
amount of fatty acids in said glycerides, are saturated fatty acids;
at least 90%, by weight of said saturated fatty acids, are fatty acids of saturated C16 and/or C18 fatty acids, and at least one additional fat or oil component, wherein the ratio of the combined percentages of SOS and SSO, by weight of the total amount of glycerides, to the percentage of SSS, by weight of the total amount of glycerides, is greater than 6, wherein the mixture is the only fat ingredient of the frozen aerated confection; and wherein "S" refers to saturated fatty acid residues of glyceride molecules, and "O" refers to oleic fatty acid residues of glyceride molecules.

2. The frozen aerated confection according to claim 1, wherein the ratio of the percentage of SOS, by weight of the total amount of glycerides, to the percentage of SSS, by weight of the total amount of glycerides, is greater than 15.

3. The frozen aerated confection according to any one of claims 1-2, wherein 20 to 30%, by weight of the total amount of fatty acids in said glycerides, are saturated fatty acids.

4. The frozen aerated confection according to anyone of claims 1-3, wherein at least 90%, by weight of the unsaturated C18 fatty acids, consists of oleic- and linoleic acid.

5. The frozen aerated confection according to anyone of claims 1-4, wherein the unsaturated C18 fatty acids comprise up to 72%, by weight of the total amount of fatty acids in said glycerides, of oleic acid;
up to 16%, by weight of the total amount of fatty acids in said glycerides, of linoleic acid; and up to 8%, by weight of the total amount of fatty acids in said glycerides, of linolenic acid.

6. The frozen aerated confection according to any one of claims 1-5, wherein the unsaturated C18 fatty acids comprise
47 to 72%, by weight of the total amount of fatty acids in said glycerides, of oleic acid;
6 to 16%, by weight of the total amount of fatty acids in said glycerides, of linoleic acid; and
0 to 8%, by weight of the total amount of fatty acids in said glycerides, of linolenic acid.

7. The frozen aerated confection according to any one of claims 1-6, wherein the unsaturated C18 fatty acids comprise at least 46%, by weight of the total amount of fatty acids in said glycerides, of oleic acid.

8. The frozen aerated confection according to any one of claims 1-7, wherein at least 65% of the glyceride crystals are in the beta form, as measured by X-ray diffraction at 5°C after 16 hours of storage.

9. The frozen aerated confection according to any one of claims 1-8, wherein at least 60% of the glyceride crystals are in the beta form, as measured by X-ray diffraction at 5°C after 16 hours of storage.

10. The frozen aerated confection according to any one of claims 1-8,
wherein the penetrometer hardness of the glycerides, as determined by means of a penetrometer cylinder with a diameter of 4 mm penetrating 10 mm at a velocity of 0.5 *mm*/*s* after 16 hours of storage of the mixture at 5°C, is at least 0.55 kg.

11. The frozen aerated confection according to any one of claims 1-10,
wherein the mixture is a mixture of a palm mid fraction and any of rapeseed oil, high oleic rapeseed oil, or high oleic sun-flower oil.

12. The frozen aerated confection according to any one of claims 1-11,
wherein the ratio of the percentage of SOS, by weight of the total amount of glycerides, to the percentage of SSS, by weight of the total amount of glycerides, is greater than 6.

13. The frozen aerated confection according to any one of claims 1-12,
wherein the ratio of the combined percentages of SOS and SSO, by weight of the total amount of glycerides, to the percentage of SAFA, by weight of the total amount of glycerides, is equal to or greater than 1; wherein "SAFA" refers to saturated fatty acids.

14. The frozen aerated confection according to any one of claims 1-13,
wherein SFC/SAFA + 0.025(30 - SAFA) ≥ 0.85; wherein "SFC" refers to the solid fat content as determined according to IUPAC 2.150, measured at 10°C.

15. The frozen aerated confection according to any one of claims 1-14,
wherein the said glyceride mixture comprises a mixture of a palm mid fraction, palm-stearin hard and any of rapeseed oil, high oleic rapeseed oil, or high oleic sunflower oil.

16. Use of a mixture consisting of glycerides wherein 18 to 35%, by weight of the total amount of fatty acids in said glycerides, are saturated fatty acids;
at least 90%, by weight of said saturated fatty acids, are fatty acids of saturated C16 and/or C18 fatty acids, and at least one additional fat or oil component, wherein the ratio of the combined percentages of SOS and SSO, by weight of the total amount of glycerides, to the percentage of SSS, by weight of the total amount of glycerides, is greater than 6, as the only fat ingredient for the manufacture of a frozen aerated confection.

## Patentansprüche

1. Gefrorene, mit Luft durchsetzte Süßware, umfassend:
ein aus Glyzeriden bestehendes Gemisch, wobei 18 bis 35%, auf das Gewicht der Gesamtmenge an Fettsäuren in den Glyzeriden, gesättigte Fettsäuren sind;
mindestens 90%, auf das Gewicht der gesättigten Fettsäuren, Fettsäuren von gesättigten C16 und/oder C18 Fettsäuren sind, und mindestens eine zusätzliche Fett- oder Öl-Komponente, wobei das Verhältnis der kombinierten Prozentsätze von SOS und SSO, auf das Gewicht der Gesamtmenge an Glyzeriden, zu dem Prozentsatz von SSS, auf das Gewicht der Gesamtmenge an Glyzeriden, größer als 6 ist, wobei das Gemisch der einzige Fett-Bestandteil der gefrorenen, mit Luft durchsetzten Süßware ist; und wobei "S" sich auf gesättigte Fettsäure-Reste von Glyzerid-Molekülen bezieht, und "O" sich auf Öl-Fettsäure-Reste von Glyzerid-Molekülen bezieht.

2. Gefrorene, mit Luft durchsetzte Süßware nach Anspruch 1, wobei das Verhältnis des Prozentsatzes von SOS, auf das Gewicht der Gesamtmenge von Glyzeriden, zu dem Prozentsatz von SSS, auf das Gewicht der Gesamtmenge von Glyzeriden, größer als 15 ist.

3. Gefrorene, mit Luft durchsetzte Süßware nach einem der Ansprüche 1-2, wobei 20 bis 30%, auf das Gewicht der Gesamtmenge an Fettsäuren in den Glyzeriden, gesättigte Fettsäuren sind.

4. Gefrorene, mit Luft durchsetzte Süßware nach einem der Ansprüche 1-3, wobei mindestens 90%, auf das Gewicht der ungesättigten C18 Fettsäuren, aus Öl- und Linolsäure bestehen.

5. Gefrorene, mit Luft durchsetzte Süßware nach einem der Ansprüche 1-4, wobei die ungesättigten C18 Fettsäuren umfassen bis zu 72%, auf das Gewicht der Gesamtmenge an Fettsäuren in den Glyzeriden, Ölsäure;
bis zu 16%, auf das Gewicht der Gesamtmenge an Fettsäuren in den Glyzeriden, Linolsäure; und
bis zu 8%, auf das Gewicht der Gesamtmenge an Fettsäuren in den Glyzeriden, Linolensäure.

6. Gefrorene, mit Luft durchsetzte Süßware nach einem der Ansprüche 1-5, wobei die ungesättigten C18 Fettsäuren umfassen
47 bis 72%, auf das Gewicht der Gesamtmenge an Fettsäuren in den Glyzeriden, Ölsäure;
6 bis 16%, auf das Gewicht der Gesamtmenge an Fettsäuren in den Glyzeriden, Linolsäure; und
0 bis 8%, auf das Gewicht der Gesamtmenge an Fettsäuren in den Glyzeriden, Linolensäure.

7. Gefrorene, mit Luft durchsetzte Süßware nach einem der Ansprüche 1-6, wobei die ungesättigten C18 Fettsäuren mindestens 46%, auf das Gewicht der Gesamtmenge an Fettsäuren in den Glyzeriden, Ölsäure umfassen.

8. Gefrorene, mit Luft durchsetzte Süßware nach einem der Ansprüche 1-7, wobei mindestens 65% der Glyzerid-Kristalle in der Beta-Form vorliegen, wenn durch Röntgenbeugung bei 5°C nach 16 Stunden Lagerung gemessen.

9. Gefrorene, mit Luft durchsetzte Süßware nach einem der Ansprüche 1-8, wobei mindestens 60% der Glyzerid-Kristalle in der Beta-Form vorliegen, wenn durch Röntgenbeugung bei 5°C nach 16 Stunden Lagerung gemessen.

10. Gefrorene, mit Luft durchsetzte Süßware nach einem der Ansprüche 1-8, wobei die Penetrometer-Härte der Glyzeride, wenn mit einem Penetrometer-Zylinder mit einem Durchmesser von 4 mm gemessen, der 10 mm bei einer Geschwindigkeit von 0,5 mm/s eindringt, nach 16 Stunden Lagerung des Gemischs bei 5°C, mindestens 0,55 kg ist.

11. Gefrorene, mit Luft durchsetzte Süßware nach einem der Ansprüche 1-10, wobei das Gemisch ein Gemisch einer Palm-Mittel-Fraktion und einem beliebigen von Rapsöl, Rapsöl mit hohem Ölsäureanteil oder Sonnenblumenöl mit hohem Ölsäureanteil ist.

12. Gefrorene, mit Luft durchsetzte Süßware nach einem der Ansprüche 1-11, wobei das Verhältnis des Prozentsatzes von SOS, auf das Gewicht der Gesamtmenge von Glyzeriden, zu dem Prozentsatz von SSS, auf das Gewicht der Gesamtmenge von Glyzeriden, größer als 6 ist.

13. Gefrorene, mit Luft durchsetzte Süßware nach einem der Ansprüche 1-12, wobei das Verhältnis der kombinierten Prozentsätze von SOS und SSO, auf das Gewicht der Gesamtmenge von Glyzeriden, zu dem Prozentsatz von SAFA, auf das Gewicht der Gesamtmenge von Glyzeriden, gleich oder größer als 1 ist, wobei "SAFA" sich auf gesättigte Fettsäuren bezieht.

14. Gefrorene, mit Luft durchsetzte Süßware nach einem der Ansprüche 1-13, wobei SFC/SAFA + 0,025(30 - SAFA) ≥ 0,85; wobei "SFC" sich auf den festen Fett-Gehalt bezieht, wenn gemäß IUPAC 2.150 bestimmt, gemessen bei 10°C.

15. Gefrorene, mit Luft durchsetzte Süßware nach einem der Ansprüche 1-14, wobei das Glyzerid-Gemisch ein Gemisch einer Palm-Mittel-Fraktion, Palm-Stearinhart und einem beliebigen von Rapsöl, Rapsöl mit hohem Ölsäureanteil oder Sonnenblumenöl mit hohem Ölsäureanteil umfasst.

16. Verwendung eines aus Glyzeriden bestehenden Gemischs, wobei 18 bis 35%, auf das Gewicht der Gesamtmenge an Fettsäuren in den Glyzeriden, gesättigte Fettsäuren sind;
mindestens 90%, auf das Gewicht der gesättigten Fettsäuren, Fettsäuren von gesättigten C16 und/oder C18 Fettsäuren sind, und mindestens eine zusätzliche Fett- oder Öl-Komponente, wobei das Verhältnis der kombinierten Prozentsätze von SOS und SSO, auf das Gewicht der Gesamtmenge an Glyzeriden, zu dem Prozentsatz von SSS, auf das Gewicht der Gesamtmenge an Glyzeriden, größer als 6 ist, als der einzige Fett-Bestandteil für die Herstellung einer gefrorenen, mit Luft durchsetzten Süßware.

## Revendications

1. Confiserie aérée congelée comprenant :
un mélange constitué de glycérides où de 18 à 35%, en poids de la quantité totale d'acides gras dans lesdits glycérides, sont des acides gras saturés ;
au moins 90% en poids desdits acides gras saturés sont des acides gras d'acides gras en C16 et/ou C18 saturés, et au moins un composant gras ou huileux supplémentaire, où le rapport des pourcentages combinés de SOS et de SSO, en poids de la quantité totale de glycérides, au pourcentage de SSS, en poids de la quantité totale de glycérides, est supérieur à 6, où le mélange est l'unique ingrédient gras de la confiserie aérée congelée ; et où « S » désigne les résidus d'acides gras saturés de molécules de glycérides, et «O» désigne les résidus d'acides gras oléiques de molécules de glycérides.

2. Confiserie aérée congelée selon la revendication 1, dans laquelle le rapport du pourcentage de SOS, en poids de la quantité totale de glycérides, au pourcentage de SSS, en poids de la quantité totale de glycérides, est supérieur à 15.

3. Confiserie aérée congelée selon la revendication 1 ou 2, dans laquelle de 20 à 30%, en poids de la quantité totale d'acides gras dans lesdits glycérides, sont des acides gras saturés.

4. Confiserie aérée congelée selon l'une quelconque des revendications 1 à 3, dans laquelle au moins 90%, en poids d'acides gras en C18 insaturés, sont constitués d'acides oléique et linoléique.

5. Confiserie aérée congelée selon l'une quelconque des revendications 1 à 4, dans laquelle les acides gras en C18 insaturés comprennent jusqu'à 72%, en poids de la quantité totale d'acides gras dans lesdits glycérides, d'acide oléique ;
jusqu'à 16%, en poids de la quantité totale d'acides gras dans lesdits glycérides, d'acide linoléique ; et
jusqu'à 8%, en poids de la quantité totale d'acides gras dans lesdits glycérides, d'acide linolénique.

6. Confiserie aérée congelée selon l'une quelconque des revendications 1 à 5, dans laquelle les acides gras en C18 insaturés comprennent de 42 à 72%, en poids de la quantité totale d'acides gras dans lesdits glycérides, d'acide oléique ;
de 6 à 16%, en poids de la quantité totale d'acides gras dans lesdits glycérides, d'acide linoléique ; et
de 0 à 8%, en poids de la quantité totale d'acides gras dans lesdits glycérides, d'acide linolénique.

7. Confiserie aérée congelée selon l'une quelconque des revendications 1 à 6, dans laquelle les acides gras en C18 insaturés comprennent au moins 46%, en poids de la quantité totale d'acides gras dans lesdits glycérides, d'acide oléique.

8. Confiserie aérée congelée selon l'une quelconque des revendications 1 à 7, dans laquelle au moins 65% des cristaux de glycéride sont sous la forme bêta, mesurée par diffraction par rayons X à 5°C après 16 heures de stockage.

9. Confiserie aérée congelée selon l'une quelconque des revendications 1 à 8, dans laquelle au moins 60% des cristaux de glycéride sont sous la forme bêta, mesurée par diffraction par rayons X à 5°C après 16 heures de stockage.

10. Confiserie aérée congelée selon l'une quelconque des revendications 1 à 8, dans laquelle la dureté par pénétromètre des glycérides, mesurée au moyen d'un cylindre de pénétromètre ayant un diamètre de 4 mm pénétrant de 10 mm à une vitesse de 0,5 mm/s après 16 heures de stockage du mélange à 5°C, est d'au moins 0,55 kg.

11. Confiserie aérée congelée selon l'une quelconque des revendications 1 à 10, dans laquelle le mélange est un mélange d'une fraction médiane de palme et l'une quelconque parmi l'huile de colza, l'huile de colza à haute teneur en acide oléique, ou l'huile de tournesol à haute teneur en acide oléique.

12. Confiserie aérée congelée selon l'une quelconque des revendications 1 à 11, dans laquelle le rapport du pourcentage de SOS, en poids de la quantité totale de glycérides, au pourcentage de SSS, en poids de la quantité totale de glycérides, est supérieur à 6.

13. Confiserie aérée congelée selon l'une quelconque des revendications 1 à 12, dans laquelle le rapport des pourcentages combinés de SOS et de SSO, en poids de la quantité totale de glycérides, au pourcentage de SAFA, en poids de la quantité totale de glycérides, est supérieur ou égal à 1 ; où « SAFA » désigne les acides gras saturés.

14. Confiserie aérée congelée selon l'une quelconque des revendications 1 à 13, dans laquelle SFC/SAFA + 0,025(30-SAFA) ≥ 0,85 ; où « SFC » désigne la teneur en matières grasses solides déterminée selon la nomenclature UICPA 2.150, mesurée à 10°C.

15. Confiserie aérée congelée selon l'une quelconque des revendications 1 à 14, dans laquelle ledit mélange de glycérides comprend un mélange d'une fraction médiane de palme, de stéarine de palme solide et l'une quelconque parmi l'huile de colza, l'huile de colza à haute teneur en acide oléique, ou l'huile de tournesol à haute teneur en acide oléique.

16. Utilisation d'un mélange constitué de glycérides où de 18 à 35%, en poids de la quantité totale d'acides gras dans lesdits glycérides, sont des acides gras saturés ;
au moins 90%, en poids desdits acides gras saturés, sont des acides gras d'acides gras en C16 et/ou C18 saturés, et au moins un composant gras ou huileux supplémentaire, où le rapport des pourcentages combinés de SOS et de SSO, en poids de la quantité totale de glycérides, au pourcentage de SSS, en poids de la quantité totale de glycérides, est supérieur à 6, en tant qu'unique ingrédient gras pour la fabrication d'une confiserie aérée congelée.
